# FASCICULE DE BREVET EUROPEEN

(11) **EP 0 865 187 B1**
(45) Date de publication et mention de la délivrance du brevet: **28.06.2006**
(21) Numéro de dépôt: 98200654.6
(22) Date de dépôt: 03.03.1998
(51) Int. Cl.: H04M 1/72, H04M 1/65

(54) **"Appareil téléphonique comportant un organe de traitement numérique pour les signaux de parole et procédé mis en oeuvre dans un tel appareil".**
Fernsprechgerät mit einer digitalen Verarbeitungsschaltung für Sprachsignale und in diesem Gerät durchgeführtes Verfahren
Telephone set including a digital processing circuit for speech signals and method carried out in such an apparatus

(30) Priorité: 11.03.1997 FR 9702869; 28.11.1997 FR 9715029
(43) Date de publication de la demande: 16.09.1998
(73) Titulaire: Koninklijke Philips Electronics N.V., 5621 BA Eindhoven (NL)
(72) Inventeur: Lorieau, Christophe, 75008 Paris (FR); Ryon, Mylène, 75008 Paris (FR)
(74) Mandataire: Chaffraix, Jean

(56) Documents cités:
- WO-A-95/34984
- GB-A- 2 254 524
- US-A- 5 528 666
- US-A- 5 583 915
- PATENT ABSTRACTS OF JAPAN vol. 097, no. 003, 31 mars 1997 & JP 08 317023 A (KYOCERA CORP), 29 novembre 1996,

## Description

L'invention concerne un appareil téléphonique auquel est rattaché au moins un combiné comportant au moins un organe de traitement numérique pour traiter des signaux numériques de parole relatifs à des messages et un dispositif répondeur du type numérique.

L'invention concerne aussi un procédé mis en oeuvre dans un tel appareil.

L'invention trouve des applications importantes notamment dans le domaine des téléphones comportant un dispositif répondeur du type numérique, par exemple ceux répondant à la norme DECT. Ces dispositifs répondeurs du type numérique s'imposent de plus en plus à cause de leur facilité d'emploi alliée à leur grande robustesse.

Dans les appareils téléphoniques du type DECT qui comportent des organes de traitements numériques, le dispositif répondeur doit comporter son propre convertisseur de sorte que les données, qu'il fournit ou qu'il reçoit, soient adaptées à la mémorisation de messages de la plus longue durée possible pour une capacité de mémoire raisonnable tout en respectant les critères d'une intelligibilité acceptable.

Le document US 5 528 666 décrit un tel appareil comprenant un circuit de compression/décompression de signaux audio qui est utilisé systématiquement pour un système répondeur.

La présente invention propose un dispositif du genre mentionné dans le préambule qui procure la fonction de répondeur sans nécessiter beaucoup de matériel et apporte à l'utilisateur des facilités de gestion du dispositif répondeur.

Pour cela, un tel dispositif est remarquable en ce qu'il comporte des moyens de commande de traitement pour que ledit organe de traitement traite les signaux de parole pour ledit combiné et pour ledit dispositif répondeur, en ce que l'organe de traitement peut opérer, selon plusieurs formats de codage/décodage et en ce qu' il est prévu des moyens de choix destinés à l'utilisateur pour déterminer un desdits formats, relatif au dispositif répondeur, en vue d'obtenir soit une plus grande durée d'enregistrement, soit une meilleure qualité des messages enregistrés.

L'idée de l'invention consiste à profiter de la présence du convertisseur déjà utilisé dans l'appareil et à le faire fonctionner de façon que l'on puisse satisfaire aux exigences de durée et d'intelligibilité des messages enregistrés dans le dispositif répondeur, en utilisant au moins un format de codage pour le dispositif répondeur.

En outre selon l'invention, il est prévu des moyens de choix destinés à l'utilisateur pour déterminer un des formats relatifs au dispositif répondeur, ce qui amène l'avantage que l'utilisateur peut choisir lui-même soit une grande durée d'enregistrement, soit une meilleure qualité des messages enregistrés en fonction de ses desiderata.

Selon un autre mode de réalisation il est prévu des moyens de commutation automatique pour qu'une partie du message soit enregistrée en haute qualité et une autre partie en basse qualité.

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre un diagramme de fonctionnement de l'appareil de la figure 1.
La figure 3 montre comment est organisée la mémoire faisant partie du répondeur.
La figure 4 est un organigramme montrant comment les messages sont enregistrés en fonction du codage désiré.
La figure 5 est un organigramme montrant comment les messages sont restitués en fonction du codage selon lequel ils ont été enregistrés.

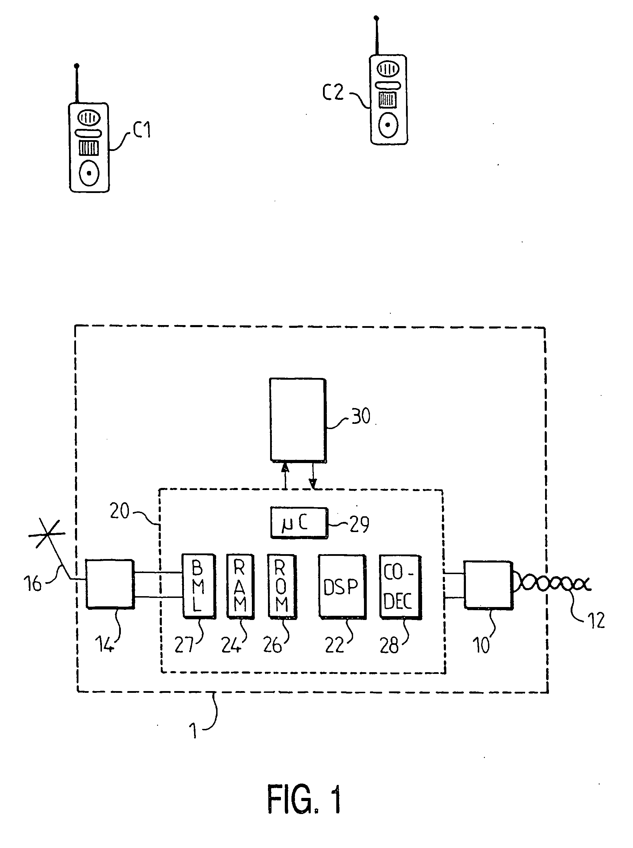

A la figure 1, l'appareil représenté est un appareil répondant aux normes DECT. La référence 1 montre le circuit de base auquel peuvent être rattachés une pluralité de combinés C1, C2, ... par voie radioélectrique. Ce circuit de base comporte, entre autres, un circuit de ligne 10 qui lui permet d'être raccordé à une ligne téléphonique 12 et un circuit radioélectrique 14 qui autorise le dialogue avec les différents combinés C1, C2,..., en émettant et en recevant des ondes par l'intermédiaire d'une antenne 16. Pour traiter toutes les informations qui transitent à l'intérieur du circuit de base, il est prévu un organe de traitement numérique 20. Cet organe est composé, de la façon usuelle :
- d'un processeur de signal 22 qui coopère avec une mémoire vive 24 et avec une mémoire morte 26 contenant des instructions de fonctionnement,
- d'un circuit d'interface 27 qui organise les données numériques selon les normes DECT afin qu'elles soient transmises via le circuit radioélectrique 14,
- d'un codec 28 pour coder sous forme numérique les signaux de parole qui sont, par nature, analogiques et
- d'un microcontrôleur 29 pour gérer toutes les fonctions de cet organe.

Cet organe 20 est constitué à partir d'un circuit intégré immatriculé PCX509x fabriqué par la société "PHILIPS Semiconductors". Le circuit de base 1 comporte aussi une mémoire 30 d'un type connu sous le nom de mémoire flash constituant l'essentiel du dispositif répondeur. Elle est donc destinée à contenir les messages nécessaires pour la fonction répondeur. Toujours dans le cadre de l'exemple décrit, cette mémoire a une capacité de 4 Megabits organisée en octets. Cette mémoire procure une durée de message de 5 minutes environ.

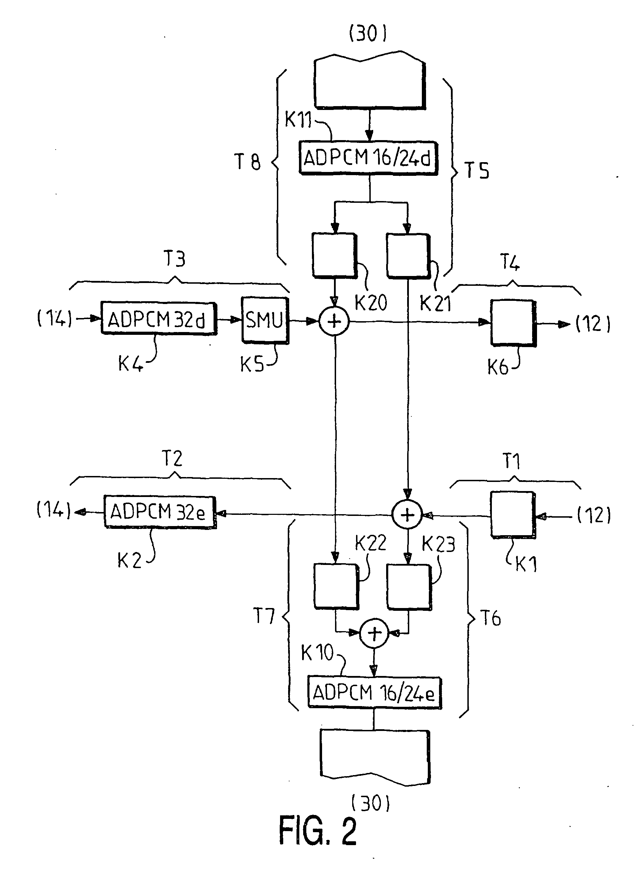

Le fonctionnement du dispositif est expliqué à l'aide de la figure 2. Sur cette figure, les différent blocs représentent des tâches à traiter par l'organe de traitement 20, en particulier par l'organe 22. Ces tâches sont exécutées en fonction du trajet des données. Ainsi selon le trajet T1, T2 le traitement est effectué pour les données qui vont de la ligne téléphonique 12 vers les combinés C1, C2,..., en passant par le circuit radioélectrique 14. Les trajets T3 et T4 sont relatifs aux données allant des combinés précités vers la ligne 12. Dans le trajet T1, on trouve la case K1 qui indique un traitement sur le niveau des signaux qui proviennent de la ligne 12 et qui se présentent sous la forme d'échantillons linéaires sur 16 bits (codage PCM) fournis par le codec 28. Avant d'être transmis au circuit 14, ces signaux sont convertis, selon un format de combiné, en codes différentiels ADPCM (case K2) dans le trajet T2. Ce code est défini par la norme du CCITT G726. Dans le trajet T3, les signaux qui proviennent du circuit 14 se présentant sous la forme ADPCM sont codés en code binaire par décodage montré à la case K4 et subissent aussi un traitement de "silencieux" à la case K5. Dans le trajet T4, le niveau est ajusté à la case K6 avant transmission sur la ligne 12 via le circuit de ligne 10 après une conversion en analogique effectuée par le codec 28.

Selon un aspect de l'invention, les données sont enregistrées dans la mémoire 30, après un codage ADPCM indiqué à la case K10 et les données provenant de cette mémoire sont encodées en linéaire par le décodage indiqué à la case K11. Pour que la mémoire n'ait pas une trop grande capacité, ce codage/décodage ADPCM est un traitement fournissant moins de bits que pour les combinés. La norme G726 précitée fournit toute indication pour ce genre de traitement selon plusieurs formats de codes différentiels destinés au répondeur. Ainsi, sont montrés à la figure 2 :
- un décodage ADPCM16d (respectivement ADPCM24d) pour signifier un transcodage d'un code différentiel dont le débit est de 16kbit/s (respectivement 24kbit/s) vers un code linéaire présentant un débit de 64kbit/s,
- un codage ADPCM16e (respectivement ADPCM24e) pour l'opération inverse c'est-à-dire le passage d'un code linéaire à 64kbit/s vers un code différentiel à 16kbit/s (respectivement à 24kbit/s),
- un décodage ADPCM32d pour signifier un transcodage d'un code différentiel dont le débit est de 32kbit/s vers un code linéaire présentant un débit de 64kbits,
- un codage ADPCM32e pour l'opération inverse c'est-à-dire le passage d'un code linéaire à 64kbit/s vers un code différentiel à 32kbit/s.

Dans ce qui suit, on ne mentionnera, pour des raisons de clarté, que le code différentiel à 16kbit/s. Mais il va de soi que le code 24kbit/s peut être utilisé sans sortir du cadre de l'invention.

En résumé, les trajets T1, T2, T3 et T4 représentent un fonctionnement n'impliquant pas le dispositif répondeur c'est-à-dire impliquant donc un encodeur 32kbit et un décodeur 32kbit.

Les trajets T1 et T6 représentent le fonctionnement en cas d'enregistrement d'un message provenant de la ligne 12 ce qui implique une opération de codage 16kbits.

Les trajets T5 et T2 représentent le fonctionnement lorsqu'un message enregistré dans la mémoire 30 est écouté depuis un combiné, ceci implique une opération de décodage 16kbit et une opération de codage 32kbit.

Les trajets T3 et T7 représentent le fonctionnement en cas d'enregistrement d'un message provenant d'un combiné. Ceci implique un décodage 32 Kbits et un codage 16 kbit.

Les trajets T8 et T4 représentent le fonctionnement lorsqu'un message est envoyé sur la ligne. Ceci implique un décodage 16 kbit.

Tous ces trajets sont déterminés par des tâches d'aiguillage représentées par les cases K20, K21, K22 et K23.

Ainsi, selon les mesures préconisées par l'invention, on se rend compte que la présence du dispositif répondeur n'apporte pratiquement aucune surcharge de travail pour l'organe de traitement 22.

Selon un mode de réalisation, les opérations de codage indiquées à la case K10 et les opérations de décodage indiquées à la case K11 sont effectuées selon l'un des formats pour répondeur de code différentiel défini lors de la construction.

Selon un autre mode de réalisation, ce format peut être choisi par l'utilisateur qui peut selon son goût, préférer d'une part une meilleure qualité de restitution sonore, il choisit alors le premier format à 24 kbit/s ou d'autre part, une plus longue durée de message à emmagasiner, il choisit donc le deuxième format à 16 kbit/s. Les échantillons de parole, pour ces formats sont, respectivement, 3 et 2 bits.

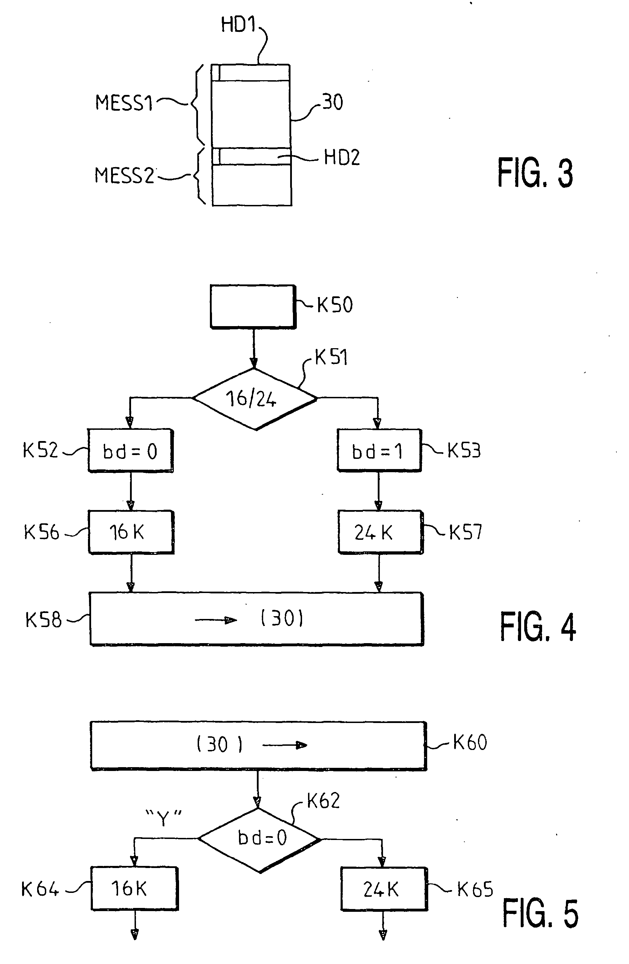

Comme cela est montré à la figure 3, pour pouvoir traiter ces deux formats, on incorpore des entêtes HD1, HD2 affectés chacun, respectivement, à des messages MESS1 et MESS2. Dans cet entête, un élément binaire "bd" permet de déterminer si l'on affaire au premier format à 24 kbits/s (bd=1) ou au deuxième format à 16 kbits/s (bd=0).

La figure 4 explicite l'opération d'enregistrement de message. La case K50 indique le début de l'opération où un item d'un menu apparaît sur l'écran du combiné invitant l'utilisateur à choisir entre le premier et le deuxième format. Ce choix étant fait (case K51), l'élément binaire bd est positionné cases K52 et K53. Le message est alors traité avec les codeurs appropriés, comme cela est montré aux cases K56 et K57, avant d'être enregistré dans la mémoire 30 (case K58).

La figure 5 montre le processus de restitution du message enregistré, contenu dans la mémoire 30 (case K60). L'entête est lu et l'élément binaire "bd" décodé (case K62). C'est cet élément binaire qui va définir l'utilisation du décodeur approprié soit le décodeur 16K (case K64), soit le décodeur 24K (case K65).

Il est aussi possible de prévoir des moyens de commutation automatique pour qu'une partie du message soit enregistrée en haute qualité et une autre partie en basse qualité. Dans ce cas, l'entête HD comportera un bit supplémentaire pour signaler que le message est en deux parties et que l'une doit être enregistrée en haute qualité et l'autre non.

## Revendications

1. Appareil téléphonique comprenant au moins un combiné auquel l'appareil est rattaché, l'appareil comportant au moins un organe de traitement numérique pour traiter des signaux numériques de parole relatifs à des messages et un dispositif répondeur du type numérique, **caractérisé en ce qu'**il comporte des moyens de commande de traitement pour que ledit organe de traitement traite les signaux de parole pour ledit combiné et pour ledit dispositif répondeur, **en ce que** l'organe de traitement peut opérer selon plusieurs formats de codage/décodage et **en ce qu'**il est prévu des moyens de choix destinés à l'utilisateur pour déterminer un desdits formats, relatif au dispositif répondeur, en vue d'obtenir soit une plus grande durée d'enregistrement, soit une meilleure qualité des messages enregistrés

2. Appareil téléphonique selon la revendication 1, **caractérisé en ce que** les codages/décodages respectent la norme G726.

3. Appareil téléphonique selon la revendication 1 ou 2, **caractérisé en ce qu'**il est prévu des moyens de commutation automatique pour que des parties du message soient enregistrées sur des formats de qualité différents.

4. Appareil téléphonique selon l'une des revendications 1 à 4 dans lequel le dispositif répondeur est formé à partir d'une mémoire numérique, **caractérisé en ce que** chaque message enregistré dans ledit dispositif répondeur comporte un identificateur pour indiquer que le format relatif au dispositif répondeur est utilisé.

5. Appareil téléphonique selon l'une des revendications 1 à 5, **caractérisé en ce que**, au plus, deux codages/décodages sont mis en oeuvre dans ledit organe de traitement.

6. Procédé mis en oeuvre dans un appareil téléphonique selon l'une des revendications 1 à 5 connecté, d'une part, à une ligne téléphonique transmettant entre autres des signaux de parole et, d'autre part à des combinés téléphoniques, **caractérisé en ce qu'**il comporte les étapes suivantes :
- mise sous forme de premiers échantillons numériques linéaires des signaux de parole provenant de ladite ligne,
- mise sous forme d'échantillons différentiels, selon un format pour combiné, desdits premiers échantillons linéaires pour une transmission vers lesdits combinés,
- mise sous forme d'échantillons différentiels, selon au moins deux formats pour répondeur, desdits premiers échantillons linéaires pour l'emmagasinage dans le dispositif répondeur,
- mise sous forme de deuxièmes échantillons numériques linéaires d'échantillons différentiels se présentant selon ledit format pour combiné,
- mise sous forme de troisième échantillons numériques linéaires d'échantillons différentiels se présentant selon le format pour répondeur.
- choix, effectué par l'utilisateur, d'un format pour répondeur,
- mise d'un indicateur affecté au message enregistré, pour définir le format pour répondeur choisi par l'utilisateur.

## Claims

1. A telephone set comprising at least a handset connected to the telephone set, the telephone set comprising at least one digital processing element for processing digital speech signals relating to messages and a digital type of responder, **characterized in that** it comprises processing control means so that said processing element processes the speech signals for said handset and for said responder, and **in that** the processing element can operate in accordance with various coding/decoding formats and **in that** selection means are provided intended for the user to determine one of said formats relating to the responder with a view to obtaining either a longer recording duration or a better quality of recorded messages.

2. A telephone set as claimed in claim 1, **characterized in that** the codings/decodings respect the G726 standard.

3. A telephone set as claimed in claim 1 or 2, **characterized in that** automatic switching means are provided so that parts of the message are recorded in formats of different quality.

4. A telephone set as claimed in any one of the claims 1 to 3 in which the responder is formed on the basis of a digital memory, **characterized in that** each recorded message in said responder comprises an identifier to indicate that the format relating to the responder is used.

5. A telephone set as claimed in any one of the claims 1 to 4, **characterized in that** no more than two codings/decodings are used in the processing element.

6. A method implemented in a telephone set as claimed in any one of the claims 1 to 5, connected, on the one hand, to a telephone line transmitting, inter alia, speech signals and, on the other hand, to telephone handsets, **characterized in that** it comprises the following steps:
- putting speech signals coming from said line in the form of first linear digital samples,
- putting said first linear samples in the form of differential samples in a handset format to transmit them to said handsets,
- putting said first linear samples in the form of differential samples according to at least one responder format to store them in the responder,
- putting differential samples which exhibit themselves in said handset format in the form of second digital linear samples,
- putting differential linear samples which exhibit themselves in the responder format in the form of third digital linear samples,
- choice, made by the user, of a format for the responder,
- placing an indicator assigned to the recorded message, to define the responder format chosen by the user.

## Patentansprüche

1. Fernsprechgerät mit mindestens einem Handset mit mindestens einer digitalen Verarbeitungsschaltung für die Verarbeitung digitaler Sprachsignale in Bezug auf Nachrichten und einer Anrufbeantworteranordnung digitalen Typ, **dadurch gekennzeichnet, dass** sie Mittel für die Steuerung der Verarbeitung enthält, damit die besagte Verarbeitungsschaltung die Sprachsignale für den besagten Fernsprecher und für die besagte Anrufbeantworteranordnung verarbeitet, dass die Verarbeitungsschaltung in mehreren Formaten zur Codierung/Decodierung arbeiten kann und **dadurch**, dass dafür bestimmte Auswahlmittel für den Anwender vorgesehen sind, um eines der besagten Formate in Bezug auf die Anrufbeantworteranordnung zu bestimmen, um entweder eine längere Aufzeichnungsdauer oder eine bessere Qualität der aufgezeichneten Nachrichten zu erhalten.

2. Fernsprechgerät nach Anspruch 1, **dadurch gekennzeichnet, dass** die Codierungen/Decodierungen der Norm G726 entsprechen.

3. Fernsprechgerät nach Anspruch 1 oder 2, **dadurch gekennzeichnet, dass** automatische Umschaltmittel vorgesehen sind, damit Teile der Nachricht in Formaten verschiedener Qualität aufgezeichnet werden.

4. Fernsprechgerät nach einem der Ansprüche 1 bis 4, in dem die Anrufbeantworteranordnung aus einem digitalen Speicher gebildet wird, **dadurch gekennzeichnet, dass** jede in der besagten Anrufbeantworteranordnung aufgezeichnete Nachricht einen Identifizierer enthält, um das bezüglich der Anrufbeantworteranordnung verwendete Format anzuzeigen.

5. Fernsprechgerät nach einem der Ansprüche 1 bis 5, **dadurch gekennzeichnet, dass** in der besagten Verarbeitungsschaltung höchstens zwei Codierungen/Decodierungen durchgeführt werden.

6. Durchgeführtes Verfahren in einem Fernsprechgerät nach einem der Ansprüche 1 bis 5, das einerseits an eine Fernsprechleitung angeschlossen ist, über die unter anderem Sprachsignale übertragen werden, und andererseits an Handsets, **dadurch gekennzeichnet, dass** es folgende Schritte enthält:
- Formatierung erster linearer digitaler Samplings der Sprachsignale, die über die besagte Leitung kommen,
- Formatierung von Differenzialsamplings in einem Format für Fernsprecher der besagten ersten linearen Samplings für eine Übertragung an die besagten Fernsprecher,
- Formatierung von Differenzialsamplings in mindestens zwei Formaten für Anrufbeantworter der besagten ersten linearen Samplings für deren Speicherung in der Anrufbeantworteranordnung,
- Formatierung von zweiten linearen digitalen Samplings von Differenzialsamplings, welche das besagte Format für Fernsprecher aufweisen,
- Formatierung von dritten linearen digitalen Samplings von Differenzialsamplings, welche das Format für Anrufbeantworter aufweisen,
- Auswahl, ausgeführt vom Anwender, eines Formats für Anrufbeantworter,
- Festlegung eines der aufgezeichneten Nachricht zugeteilten Indikators, um das vom Anwender gewählte Format für Anrufbeantworter zu definieren.
